# EUROPEAN PATENT APPLICATION

(11) **EP 4 790 378 A1**
(43) Date of publication of application: **12.08.2026**
(21) Application number: 26151807.0
(22) Date of filing: 14.01.2026
(51) Int. Cl.: G01M 5/00, G01M 99/00, G01M 15/14, F01D 21/00, F01D 5/18

(54) **INSPECTION SYSTEM FOR AT LEAST PARTIALY BLOCKED COOLING HOLES IN COMPONENT**

(30) Priority: 06.02.2025 US 202519047152
(71) Applicant: GE Vernova Technology GmbH, 5400 Baden (CH)
(72) Inventor: SEE, Hian Hian, 628341 Singapore (SG); LOMAS, Jonathan Matthew, Greenville, 29615 (US); SALM, Jacob Andrew, Greenville, 29615 (US); LOH, Sin Yee, 628341 Singapore (SG)
(74) Representative: Freigutpartners IP Law Firm

(57) **Abstract**

An inspection system (126) for inspecting cooling holes (120) in a component (90) and a related method are provided. The inspection system includes at least one inspection element (128). Each inspection element includes a probe element (132) configured to be inserted into a respective cooling hole (120) of the plurality of cooling holes. Each inspection element includes a three-axes force/torque transducer (140) operatively coupled to each probe element. The three-axes force/torque transducer measures three-axes forces applied to the probe element and three-axes torques applied to the probe element during insertion of the probe element into the respective cooling hole. A controller (150) is operatively coupled to each inspection element and determines whether the respective cooling hole into which a respective inspection element is inserted is at least partially blocked based on at least one of the three-axes forces and the three-axes torques measured by the three-axes force/torque transducer of the respective inspection element.

## Description

### TECHNICAL FIELD

The disclosure relates generally to industrial components. More specifically, the disclosure relates to an inspection system for at least partially blocked cooling holes in an industrial component. More in particular, the herein claimed invention relates to the subject matter set forth in the appended claims.

### BACKGROUND

Industrial components may include a body having one or more hollow cooling passages through which coolant passes to cool the component. The cooling passage(s) may extend to a surface of the industrial component, e.g., a turbine airfoil or nozzle, where coolant exits from a plurality of cooling holes that are in fluid communication with the coolant passage(s). The cooling holes can number in the thousands on larger components.

After manufacture or during maintenance, the cooling holes are inspected to ensure they are not blocked. The cooling holes can be at least partially blocked in a number of ways. For example, cooling holes may be blocked by coatings applied to the exterior surface of the component. In another example, cooling holes may be blocked by debris from reamers and/or drill bits used to shape their interior. Also, during certain processes, masking materials may be applied to the cooling holes to prevent damaging materials from entering the cooling holes to avoid damage to the coolant passages, the cooling holes or other structures of the component. In some cases, the removal of the masking material is incomplete, leaving cooling hole(s) at least partially blocked.

After any process that can potentially block cooling hole(s) they are inspected to ensure they are unblocked. The inspection may take a variety of forms. One approach visually inspects the cooling holes. Another approach manually inserts a wire or pin-like structure into the cooling hole to identify a blockage, e.g., by human sensory feedback. These two approaches are unreliable because they are highly subjective based on the human user, and they are inefficient because, as noted, the cooling holes can number in the thousands. In addition, the cooling holes typically do not provide a clear line of sight, which makes these approaches highly subjective. Other approaches flow a controlled temperature fluid through the component and identify blockages based on expected thermographic data or flow a fluid through the component and check for an expected fluid flow rate from the cooling holes. These two approaches require equipment to flow a fluid through the component and either thermo-graphically image the component or measure a flow rate at each cooling hole of the component.

### BRIEF DESCRIPTION

The herein claimed invention relates to the subject matter set forth in the appended claims. Aspects, examples and features, whether herein claimed or not, are described in the description below. All aspects, examples and features mentioned below can be combined in any technically possible way.

An aspect of the disclosure provides an inspection system for inspecting a plurality of cooling holes in a component, the inspection system comprising: at least one inspection element, each inspection element including: a probe element, the probe element or at least a forward section of the probe element configured to be inserted into a respective cooling hole of the plurality of cooling holes; and a three-axes force/torque transducer operatively coupled to each probe element, the three-axes force/torque transducer configured to measure three-axes forces applied to the probe element and three-axes torques applied to the probe element during insertion of the probe element into the respective cooling hole; and a controller operatively coupled to each inspection element and configured to determine whether the respective cooling hole into which a respective inspection element is, at least partially, i.e., at least the forward section thereof, is inserted is at least partially blocked based on at least one of the three-axes forces and the three-axes torques measured by the three-axes force/torque transducer of the respective inspection element. A three-axis force/toque transducer, as used herein, is used to designate a combined force and torque transducer which is configured and suitable to measure forces along each of three axis and torques around each of three axis. An axis along which the force/toque transducer is configured to measure a force may be called a force measurement axis. An axis around which the force/toque transducer is configured to measure a torque may be called a torque measurement axis. In particular, while non-limiting, aspects, at least one axis along which a force can be measured, i.e., at least one force measurement axis, may be identical with at least one axis around which a torque is measured, i.e., at least one torque measurement axis. In further, while non-limiting, particular aspects, each of the three force measurement axis may be identical with one of the three torque measurement axis. In other aspects, the force/torque transducer may be configured to measure forces along each force measurement axis simultaneously. In still further aspects, the force/torque transducer may be configured to measure torques around each torque measurement axis simultaneously. The force/torque transducer may be configured to measure forces and torques simultaneously. The force/torque transducer may be configured to measure forces along each of three force measurement axis and torques around each of three torque measurement axis simultaneously.

Another aspect of the disclosure includes any of the preceding aspects and/or the features of any appended claim, and the controller is further configured to generate a dataset correlating a plurality of blockage signatures with a plurality of blockage types for at least one type of cooling hole, wherein each blockage signature is based on at least one of the three-axes forces and the three-axes torques measured by the three-axes force/torque transducer for the at least partial blockage of a respective cooling hole of the same type as the at least one type of cooling hole.

Another aspect of the disclosure includes any of the preceding aspects and/or the features of any appended claim, and the controller is further configured to identify a blockage type of an at least partial blockage in another respective cooling hole by comparing the blockage signature of the at least partial blockage to the plurality of blockage signatures in the dataset.

Another aspect of the disclosure includes any of the preceding aspects and/or the features of any appended claim, and the controller includes at least one of a machine learning algorithm and an advanced statistical analysis engine configured to analyze the dataset.

Another aspect of the disclosure includes any of the preceding aspects and/or the features of any appended claim, and the at least one inspection element further includes a tactile transducer configured to measure a tactile response of the at least partial blockage in the respective cooling hole in response to a predefined frequency applied thereto, and wherein each blockage signature is further based on the tactile response measured by the tactile transducer for the at least partial blockage of the respective cooling hole of the same type as the at least one type of cooling hole.

Another aspect of the disclosure includes any of the preceding aspects and/or the features of any appended claim, and the at least one inspection element further includes a tactile-visual transducer configured to measure a tactile response and a visual response of the respective cooling hole in response to a predefined frequency applied thereto, and wherein each blockage signature is further based on the tactile response and the visual response measured by the tactile-visual transducer for the at least partial blockage of the respective cooling hole of the same type as the at least one type of cooling hole.

Another aspect of the disclosure includes any of the preceding aspects and/or the features of any appended claim, and the at least one inspection element further includes a tactile transducer configured to measure a tactile response of the respective cooling hole in response to a predefined frequency applied thereto, wherein the controller is further configured to determine whether the respective cooling hole is at least partially blocked based on the tactile response in addition to the at least one of the three-axes forces and the three-axes torques measured by the three-axes force/torque transducer of the inspection element inserted into the respective cooling hole.

Another aspect of the disclosure includes any of the preceding aspects and/or the features of any appended claim, and the at least one inspection element further includes a tactile-visual transducer configured to measure a tactile response and a visual response of the respective cooling hole in response to a predefined frequency applied thereto, and wherein the controller is further configured to determine whether the respective cooling hole is at least partially blocked based on the tactile response and the visual response in addition to the at least one of the three-axes forces and the three-axes torques measured by the three-axes force/torque transducer of the inspection element inserted into the respective cooling hole.

Another aspect of the disclosure includes any of the preceding aspects and/or the features of any appended claim, and further comprising an at least semi-automated positioning system configured to insert each probe element into the respective cooling hole.

Another aspect of the disclosure includes a method for inspecting a plurality of cooling holes in a component, the method comprising: inspecting each respective cooling hole of the plurality of cooling holes using an inspection element including: a probe element, the probe element or at least a forward section thereof configured to be inserted into a respective cooling hole of the plurality of cooling holes, and a three-axes force/torque transducer operatively coupled to the probe element, the three-axes force/torque transducer configured to measure three-axes forces applied to the probe element and three-axes torques applied to the probe element, wherein the inspecting includes inserting the probe element, or at least a forwards section thereof, respectively, into the respective cooling hole; determining, using a controller operatively coupled to each inspection element, whether the respective cooling hole is at least partially blocked based on at least one of the three-axes forces and the three-axes torques measured by the three-axes force/torque transducer of the inspection element inserted into the respective cooling hole; and in response to the respective cooling hole being at least partially blocked, performing an action to rectify the at least partial blockage.

Another aspect of the disclosure includes any of the preceding aspects and/or the features of any appended claim, and further comprising generating a dataset correlating a plurality of blockage signatures with a plurality of blockage types for at least one type of cooling hole, wherein each blockage signature is based on at least one of the three-axes forces and the three-axes torques measured by the three-axes force/torque transducer for the at least partial blockage of a respective cooling hole of the same type as the at least one type of cooling hole.

Another aspect of the disclosure includes any of the preceding aspects and/or the features of any appended claim, and further comprising identifying a blockage type of an at least partial blockage in another respective cooling hole by comparing the blockage signature of the at least partial blockage to the plurality of blockage signatures in the dataset.

Another aspect of the disclosure includes any of the preceding aspects and/or the features of any appended claim, and further comprising using at least one of a machine learning algorithm and an advanced statistical analysis engine to analyze the dataset.

Another aspect of the disclosure includes any of the preceding aspects and/or the features of any appended claim, and the at least one inspection element further includes a tactile transducer configured to measure a tactile response of the at least partial blockage in the respective cooling hole in response to a predefined frequency applied thereto, and wherein each blockage signature is further based on the tactile response measured by the tactile transducer for the at least partial blockage of the respective cooling hole of the same type as the at least one type of cooling hole.

Another aspect of the disclosure includes any of the preceding aspects and/or the features of any appended claim, and the at least one inspection element further includes a tactile-visual transducer configured to measure a tactile response and a visual response of the respective cooling hole in response to a predefined frequency applied thereto, and wherein each blockage signature is further based on the tactile response and the visual response measured by the tactile-visual transducer for the at least partial blockage of the respective cooling hole of the same type as the at least one type of cooling hole.

Another aspect of the disclosure includes any of the preceding aspects and/or the features of any appended claim, and the at least one inspection element further includes a tactile transducer configured to measure a tactile response of the respective cooling hole in response to a predefined frequency applied thereto, and determining whether the respective cooling hole is at least partially blocked is based on the tactile response in addition to the at least one of the three-axes forces and the three-axes torques measured by the three-axes force/torque transducer of the inspection element inserted into the respective cooling hole.

Another aspect of the disclosure includes any of the preceding aspects and/or the features of any appended claim, and the at least one inspection element further includes a tactile-visual transducer configured to measure a tactile response and a visual response of the respective cooling hole in response to a predefined frequency applied thereto, and wherein determining whether the respective cooling hole is at least partially blocked is based on the tactile response and the visual response in addition to the at least one of the three-axes forces and the three-axes torques measured by the three-axes force/torque transducer of the inspection element inserted into the respective cooling hole.

Two or more aspects described in this disclosure, including those described in this summary section, may be combined to form implementations not specifically described herein. That is, all embodiments described herein can be combined with each other.

The details of one or more implementations are set forth in the accompanying drawings and the description below. Other features, objects and advantages will be apparent from the description and drawings, and from the claims.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a perspective view of an illustrative industrial component in the form of a turbine blade to which teachings of the disclosure may be applied;
FIG. 2 shows a perspective view of an illustrative industrial component in the form of a turbine nozzle to which teachings of the disclosure may be applied;
FIG. 3 shows a schematic view of an inspection system according to embodiments of the disclosure;
FIG. 4 shows a partially cross-sectional side view of an inspection element of an inspection system in an at least partially blocked cooling hole according to embodiments of the disclosure;
FIG. 5 shows a cross-sectional view of a cooling hole having different cross-sectional dimensions;
FIG. 6 shows a schematic view of an inspection element according to other embodiments of the disclosure;
FIG. 7 shows a schematic view of an inspection element according to additional embodiments of the disclosure;
FIG. 8 shows a flow diagram of a method of inspecting a plurality of cooling holes according to embodiments of the disclosure;
FIG. 9 shows a graph illustrating three-axes force measurements Fx, Fy, Fz versus time during inspection of an at least partially blocked cooling hole according to embodiments of the disclosure;
FIGS. 10A-B show partial cross-sectional side views of an inspection element of an inspection system being inserted in an at least partially blocked cooling hole according to other embodiments of the disclosure;
FIG. 11 shows a graph illustrating three-axes force measurements Fx, Fy, Fz versus time during inspection of a partially blocked cooling hole according to embodiments of the disclosure; and
FIG. 12 shows a graph illustrating three-axes torque measurements Mx, My, Mz versus time during inspection of a partially blocked cooling hole according to embodiments of the disclosure.

It is noted that the drawings of the disclosure are not necessarily to scale. The drawings are intended to depict only typical aspects of the disclosure and therefore should not be considered as limiting the scope of the disclosure. In the drawings, like numbering represents like elements between the drawings.

### DETAILED DESCRIPTION

As an initial matter, in order to clearly describe the subject matter of the current technology, it will become necessary to select certain terminology when referring to and describing relevant machine components within the illustrative application of an industrial component such as a turbine nozzle or airfoil having cooling holes therein. When doing this, if possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

In addition, several descriptive terms may be used regularly herein, and it should prove helpful to define these terms at the onset of this section. These terms and their definitions, unless stated otherwise, are as follows. As used herein, "downstream" and "upstream" are terms that indicate a direction relative to the flow of a fluid, such as the coolant through cooling holes in a turbine component. The term "downstream" corresponds to the direction of flow of the fluid, and the term "upstream" refers to the direction opposite to the flow.

It is often required to describe parts that are at different radial positions with regard to a center axis. The term "axial" refers to movement or position parallel to an axis, e.g., an axis of cooling hole. The term "radial" refers to movement or position perpendicular to an axis, e.g., an axis of cooling hole. In cases such as this, if a first component resides closer to the axis than a second component, it will be stated herein that the first component is "radially inward" or "inboard" of the second component. If, on the other hand, the first component resides further from the axis than the second component, it may be stated herein that the first component is "radially outward" or "outboard" of the second component. Finally, the term "circumferential" refers to movement or position around an axis, e.g., a circumferential interior surface of cooling hole. As indicated above, it will be appreciated that such terms may be applied in relation to the axis of a cooling hole in a turbine component or other structure.

In addition, several descriptive terms may be used regularly herein, as described below. The terms "first," "second," and "third," may be used interchangeably to distinguish one component from another and are not intended to signify location or importance of the individual components.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event may or may not occur or that the subsequently described feature may or may not be present and that the description includes instances where the event occurs or the feature is present and instances where the event does not occur or the feature is not present.

Where an element or layer is referred to as being "on," "engaged to," "connected to," "coupled to," or "mounted to" another element or layer, it may be directly on, engaged, connected, coupled, or mounted to the other element or layer, or intervening elements or layers may be present. In contrast, when an element is referred to as being "directly on," "directly engaged to," "directly connected to," or "directly coupled to" another element or layer, there are no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items. The verb forms of "couple" and "mount" may be used interchangeably herein.

Embodiments of the disclosure include an inspection system for inspecting cooling holes in a component and a related method. The inspection system includes at least one inspection element. Each inspection element includes a probe element configured to be inserted into a respective cooling hole of the plurality of cooling holes. Each inspection element also includes a three-axes force/torque transducer operatively coupled to each probe element. The three-axes force/torque transducer measures three-axes forces Fx, Fy, Fz applied to the probe element and three-axes torques Mx, My, Mz applied to the probe element during insertion of the probe element into the respective cooling hole, i.e., over time. A controller is operatively coupled to each inspection element and determines whether the respective cooling hole into which a respective inspection element is inserted is at least partially blocked based on at least one of the three-axes forces Fx, Fy, Fz and the three-axes torques Mx, My, Mz measured by the three-axes force/torque transducer of the respective inspection element. The disclosure enables non-destructive inspection of cooling holes with increased accuracy and efficiency. The inspection system and method do not necessarily require flowing a fluid through the component or direct line-of-sight to the cooling holes, and do not rely on human sensory feedback.

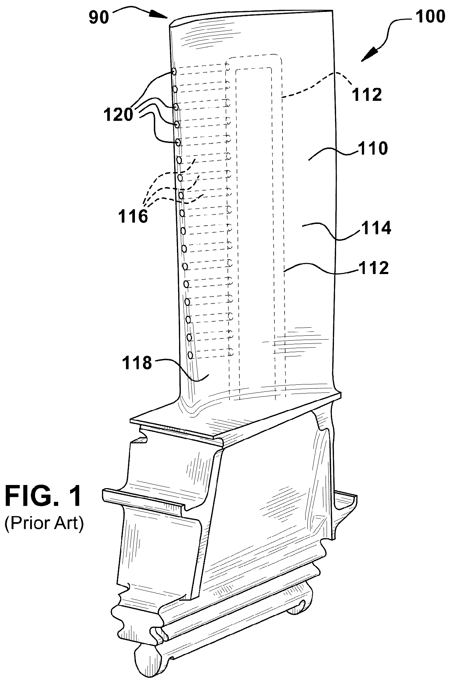

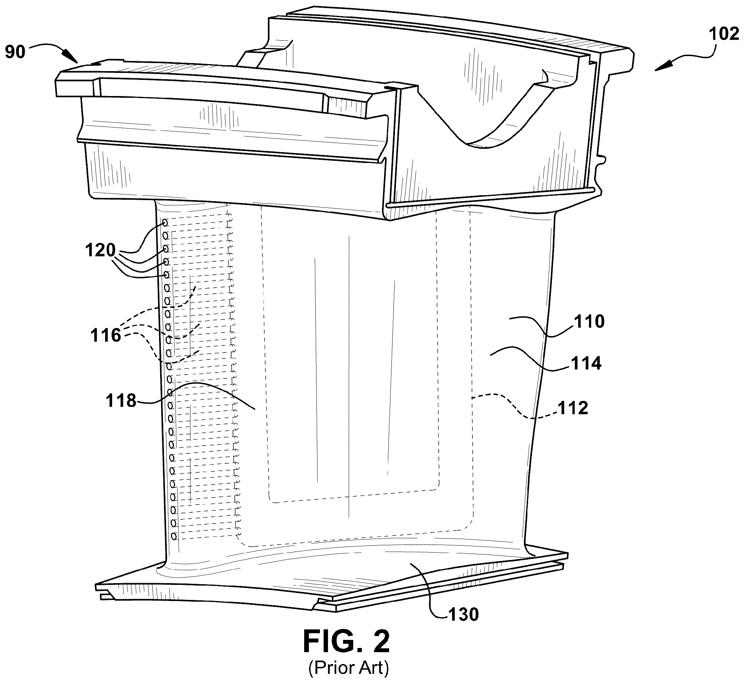

FIGS. 1 and 2 show perspective views of illustrative industrial components 90 for which an inspection system (not shown in FIGS. 1-2) according to embodiments of the disclosure may be employed. For purposes of description, the illustrative industrial components 90 may include a turbine blade 100 (FIG. 1) or a turbine stationary nozzle 102 (FIG. 2). Each component 90 includes a body 110 that may have one or more central cooling passages 112 defined therein for delivery of a coolant through parts of body 110. In the illustrative components, at least part of body 110 may include an airfoil 114 through which cooling passage(s) 112 extend, but it is understood that the teachings of the disclosure may be applied to a wide variety of other parts of turbine blade 100 or turbine nozzle 102. Cooling passage(s) 112 can take a wide variety of paths through airfoil 114, e.g., sinusoidal, U-shaped, etc. Cooling passage(s) 112 also include sub-passages 116 that deliver coolant to an exterior surface 118 of component 90. Coolant exits components 90 through a plurality of cooling holes 120 provided in exterior surface(s) 118 of component 90. While cooling holes 120 are shown in a particular edge of airfoil 114, e.g., a trailing edge or leading edge, it is recognized that they can be located in a wide variety of locations on component 90. It is understood that each component 90 may include hundreds, perhaps thousands of cooling holes 120. As noted, material may at least partially block one or more cooling holes 120 and may enter cooling hole(s) 120 during their initial formation and/or during maintenance of components 90.

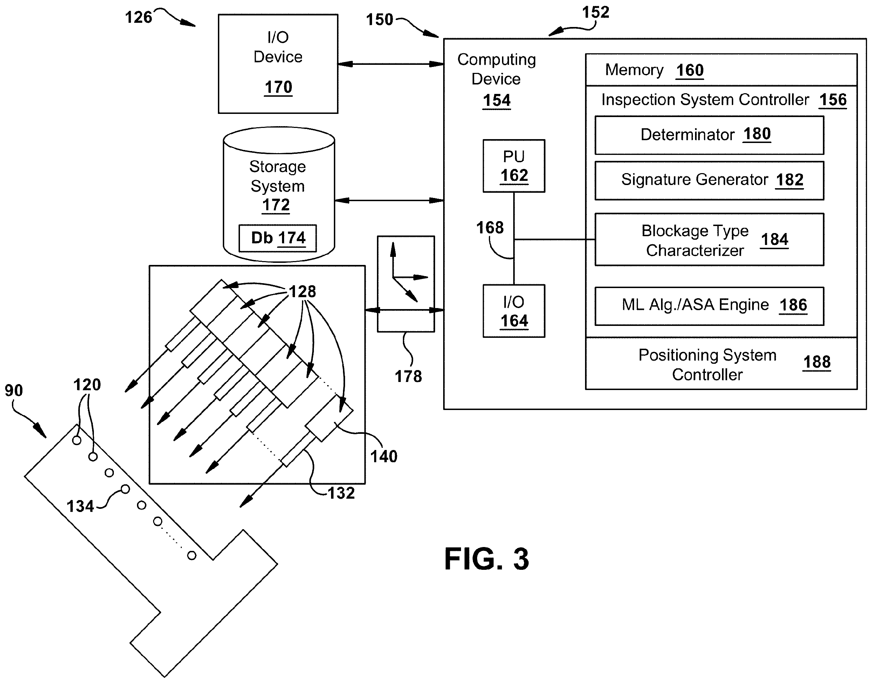

FIG. 3 shows a schematic view of an inspection system 126 according to embodiments of the disclosure. Inspection system 126 includes at least one inspection element 128 for inspecting a respective cooling hole 134 of plurality of cooling holes 120 in component 90. In FIG. 3, seven inspection elements 128 are shown, but any number may be used. Inspection elements 128 can be arranged to inspect any corresponding number of respective cooling holes 134 simultaneously or sequentially. As will be described herein, inspection system 126 also includes a computerized controller 150. Optionally, as will be described herein, inspection system 126 may also include an at least semi-automated positioning system 178 for one or more inspection elements 128.

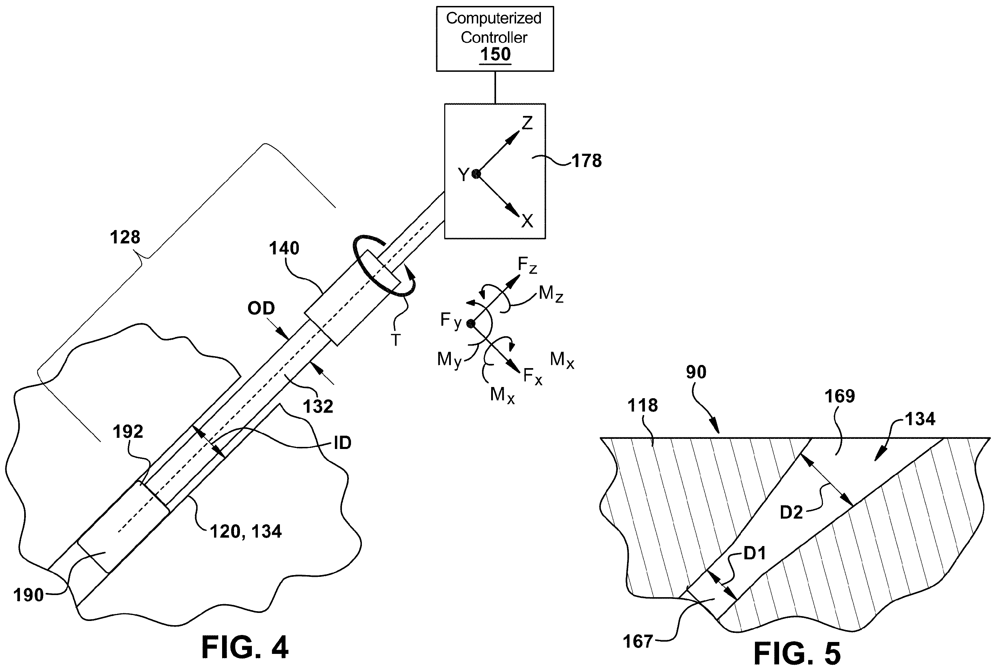

With reference to FIGS. 4-7, details of inspection element 128 will now be described. FIG. 4 shows a side view of inspection element 128 according to embodiments of the disclosure. Each inspection element 128 includes a probe element 132 configured to be inserted into a respective cooling hole 134 of plurality of cooling holes 120. In this regard, probe element 132 may have a maximum outer dimension (OD) smaller than a minimum inner dimension (ID) of a respective cooling hole 134. While probe element 132 and respective cooling hole 134 are shown as circular (see, e.g., FIG. 3), they may have different cross-sectional shapes. Cooling hole 134 may have a variety of alternative shapes such as but not limited to oval and trapezoidal. In addition, as understood in the art, cooling hole 134 may have different cross-sectional shapes and/or sizes at different locations along its length. FIG. 5 shows one example of a cooling hole 134 having different cross-sectional shapes and/or sizes for a cooling hole 134. In this example, cooling hole 134 may have an inner metering portion 167 having a first cross-sectional area (at D1) used to meter coolant flow from respective cooling hole 134, and an outer expansion portion 169 having an enlarged or enlarging cross-sectional area (indicated by D2) extending from inner metering portion 167 to exterior surface 118 of component 90 used to allow coolant to expand and spread as it exits respective cooling hole 134. It is recognized that cooling hole 134 may have a large variety of alternative shapes and/or sizes that can be addressed by inspection system 126 within the scope of the disclosure. Probe elements 132 typically have a maximum outer dimension OD (FIG. 4) to fit within the smallest inner dimension (ID) (FIG. 4) of respective cooling hole 134. Each probe element 132 can take a variety of forms to ensure it fits into a respective cooling hole 134 to the desired depth. Although probe elements 132 in FIG. 3 are all shown as the same type, where a plurality of inspection elements 128 are used, the format of each probe element 132 (e.g., cross-sectional shape, cross-sectional size, length, etc.), may vary depending, for example, on the respective cooling hole 134 in which used.

Probe elements 132 may be made of any material having sufficient strength to accurately transfer three-axes forces Fx, Fy, Fz and/or three-axes torques Mx, My, Mz (i.e., a rotational force) there along, i.e., while being inserted into respective cooling hole 134. In certain embodiments, probe element 132 may be rigid; however, it also may have some level of flexibility to allow it to pass through curved areas of a respective cooling hole 134. Probe element 132 may be made of a metal or metal alloy such as aluminum, a plastic or other material having sufficient strength to accurately transfer three-axes forces Fx, Fy, Fz and/or three-axes torques Mx, My, Mz there along, i.e., while being inserted into respective cooling hole 134.

As shown in FIG. 4, each inspection element 128 also includes a three-axes force/torque transducer 140 operatively coupled to each probe element 132. Three-axes force/torque transducer 140 (hereafter "3FT transducer 140" for brevity) is configured to measure force along three-axes, i.e., X, Y and Z, applied to probe element 132 and torque around three-axes, i.e., rotational force around three axes X, Y and Z, applied to probe element 132 during insertion of probe element 132 into respective cooling hole 134. That is, 3FT transducer 140 converts mechanical forces, i.e., three-axes forces, i.e., Fx, Fy, Fz, and three-axes torques, i.e., Mx, My, Mz, into electrical signals that can be read and analyzed. 3FT transducer 140 may include any now known or later developed three-axes force/torque transducer or sensor such as but not limited to those that are: strain gauge-based, piezoelectric-based, capacitive-based, optical-based, magneto-strictive-based and/or a combination thereof.

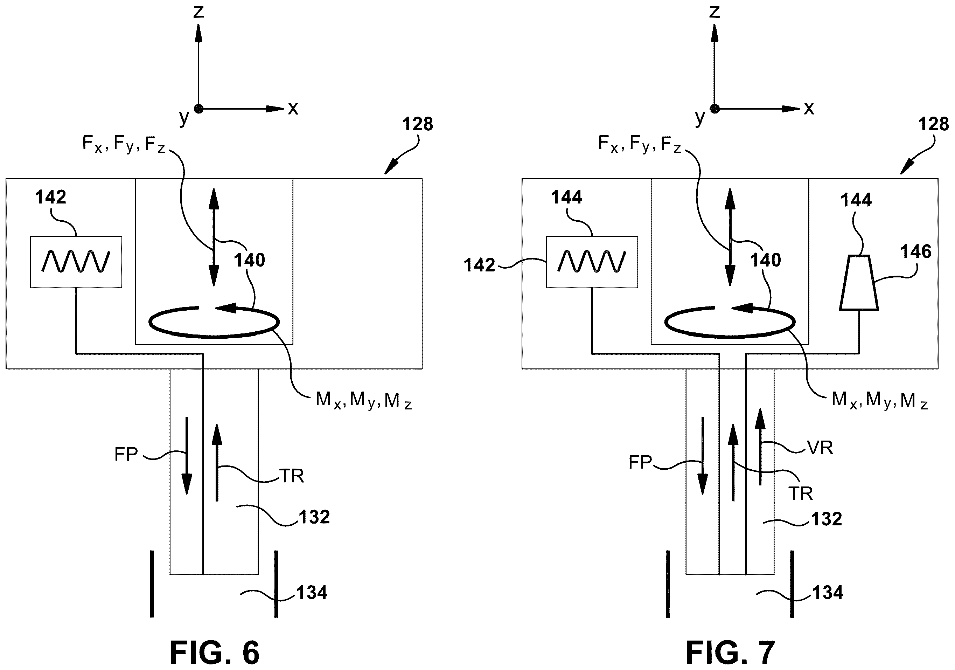

FIG. 6 and 7 show schematic views of inspection element 128 according to various other embodiments. In certain embodiments, as shown in FIG. 6, inspection element 128 may further include a tactile transducer 142 configured to measure a tactile response TR of respective cooling hole 134 in response to a predefined frequency FP applied thereto. Tactile transducer 142 may include any now known or later developed device that transmits vibrations (i.e., at predefined frequency FP) into cooling hole 134 and measure tactile response TR, i.e., converting a vibratory response into an electrical signal that can be read and analyzed. The tactile response may be analyzed to identify blockage(s) within respective cooling hole 134. Tactile transducer 142 may include any now known or later developed tactile/vibratory transducer or sensor such as but not limited to those that are: piezoresistive-based, optical-based, magnetic-based and/or a combination thereof. Tactile transducer 142 may include an array of tactile elements in which each element function similarly to an image pixel, providing both the location and numerical values of the measured force and/or torque.

In certain embodiments, as shown in FIG. 7, inspection element 128 may further include a tactile-visual transducer 144 configured to measure a tactile response TR and a visual response VR of respective cooling hole 134 in response to a predefined frequency FP applied thereto. Tactile-visual transducer 144 may include tactile transducer 142, as described herein, and an imaging device 146. In some cases, tactile transducer 142 and an imaging device 146 may be an integrated unit. Imaging device 146 may include any now known or later developed device that captures visual images in electronic signals (i.e., digital camera) from respective cooling hole 134. The tactile response TP and visual response VR may be analyzed to identify blockage(s) within respective cooling hole 134. Tactile-visual transducer 144 may include any now known or later developed tactile/vibratory and visual transducer(s) or sensor(s) that combine tactile and visual sensing capabilities, enabling simultaneous perception of touch and sight, such as certain products available from GelSight^{®} of Waltham, MA, USA.

Returning to FIG. 3, inspection system 126 also includes a controller 150 operatively coupled to each inspection element 128 and configured to, among other things, determine whether the respective cooling hole 134 into which a respective inspection element 128 is inserted is at least partially blocked based on at least one of three-axes forces Fx, Fy, Fz (FIGS. 4, 6, 7) and three-axes torques Mx, My, Mz (FIGS. 4, 6, 7) measured by 3FT transducer 140 of the respective inspection element 128. That is, controller 150 determines whether the respective cooling hole 134 into which a respective inspection element 128 is inserted is at least partially blocked based on force Fx, force Fy, force Fz, torque Mx, torque My and/or torque Mz measured by 3FT transducer 140 of the respective inspection element 128. Controller 150 may include any now known or later developed industrial computerized controller capable of performing the functions described herein. More particularly, in certain embodiments, controller 150 includes a computer infrastructure 152 that can perform the various process steps described herein for inspection system 126. Computer infrastructure 152 is shown including a computing device 154 that includes an inspection system controller 156 and, optionally, a positioning system controller 188. Inspection system controller 156 enables computing device 154 to determine whether cooling hole(s) 120 are at least partially blocked using inspection element(s) 128. Optional positioning system controller 188 provides, as will be described herein, at least some control of (optional) at least semi-automatic positioning system 178.

Computing device 154 of controller 150 is shown including a memory 160, a processor (PU) 162, an input/output (I/O) interface 164, and a bus 168. Further, computing device 154 is shown in communication with an external I/O interface 170 and a storage system 172. As is known in the art, in general, processor 162 executes computer program code, such as inspection system controller 156, that is stored in memory 160 and/or a storage system 172. While executing computer program code, processor 162 can read and/or write data, such as operational data, to/from memory 160, storage system 172, and/or I/O interface 170. Bus 168 provides a communications link between each of the components in computing device 154. I/O interface 170 can comprise any device that enables a user to interact with computing device 154 or any device that enables computing device 154 to communicate with one or more other computing devices, inspection element(s) 128 and/or at least semi-automatic positioning system 178. Input/output devices (including but not limited to keyboards, displays, pointing devices, inspection element(s) 128, etc.) can be coupled to the system either directly or through intervening I/O controllers.

In any event, computing device 154 can comprise any general-purpose computing article of manufacture capable of executing computer program code installed by a user (e.g., a personal computer, server, handheld device, etc.). However, it is understood that computing device 154 and inspection system controller 156 (and positioning system controller 188) are only representative of various possible equivalent computing devices that may perform the various process steps of the disclosure. To this extent, in other embodiments, computing device 154 can comprise any specific purpose computing article of manufacture comprising hardware and/or computer program code for performing specific functions, any computing article of manufacture that comprises a combination of specific purpose and general-purpose hardware/software, or the like. In each case, the program code and hardware can be created using standard programming and engineering techniques, respectively.

Similarly, computer infrastructure 152 is only illustrative of various types of computer infrastructures for implementing the disclosure. For example, in one embodiment, computer infrastructure 152 comprises two or more computing devices (e.g., a server cluster) that communicate over any type of wired and/or wireless communications link, such as a network, a shared memory, or the like, to perform the various process steps of the disclosure. When the communications link comprises a network, the network can comprise any combination of one or more types of networks (e.g., the Internet, a wide area network, a local area network, a virtual private network, etc.). Network adapters may also be coupled to the system to enable the data processing system to become coupled to other data processing systems or remote printers or storage devices through intervening private or public networks. Modems, cable modem and Ethernet cards are just a few of the currently available types of network adapters. Regardless, communications between the computing devices may utilize any combination of various types of transmission techniques.

As previously mentioned and discussed further below, inspection system controller 156 enables computing infrastructure 152 to transmit data to/from inspection element(s) 128 and analyze data from inspection element(s) 128. Inspection system controller 156 also enables computing infrastructure 152 to transmit data to/from a database 174 to determine a blockage of cooling holes 120. For example, as will be further described herein, database 174 may store/include, among other things, a dataset correlating a plurality of blockage signatures with a plurality of blockage types for at least one type of cooling hole 120. As will also be described herein, the dataset can be used to determine whether an at least partial blockage exists, and/or type of blockage, in a respective cooling hole 134. Blockage signatures may include, among other things, characteristics of any of force Fx, force Fy, force Fz, torque Mx, torque My and torque Mz (e.g., values and/or patterns) correlated to a blockage type for a particular type of cooling hole 120. As will be described, the blockage types may include but are not limited to: a complete blockage with a planar surface, complete blockage with non-planar surface forcing probe to rotate clockwise or counterclockwise, and axially dispersed partial blockages that cause various force and torque values as probe element 132 is inserted over time.

As an introduction, inspection system controller 156 is shown including a determinator 180, a signature generator 182 and a blockage type characterizer 184. Inspection system controller 156 may also optionally include at least one of a machine learning algorithm (ML Alg.) and advanced statistical analysis (ASA) engine 186. The functioning of all of the afore-mentioned parts of inspection system controller 156 will be described further herein. Inspection system controller 156 may interact with positioning system controller 188 for controlling operation of at least semi-automatic positioning system 178. Alternatively, positioning system controller 188 may be provided separately from inspection system 126, e.g., as part of at least semi-automatic positioning system 178 and may be in operative communication with inspection system controller 156 rather than part of inspection system 126. Inspection system controller 156 may also include other system components (not shown) to assist in determining whether cooling hole(s) 120 are at least partially blocked other than as expressly described herein. It is understood that some of the various systems shown in FIG. 3 can be implemented independently, combined, and/or stored in memory for one or more separate computing devices that are included in computer infrastructure 152. Further, it is understood that some of the systems and/or functionality may not be implemented, or additional systems and/or functionality may be included as part of computer infrastructure 152.

As will be appreciated by one skilled in the art, inspection system controller 156 and positioning system controller 188, and parts thereof, according to the present disclosure may be embodied as a system, method or computer program product. Accordingly, parts of the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, parts of the present disclosure may take the form of a computer program product embodied in any tangible medium of expression having computer-usable program code embodied in the medium.

Any combination of one or more computer usable or computer readable medium(s) may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, a magnetic storage device, or a solid state storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to wireless, wireline, optical fiber cable, RF, etc. In certain embodiments, the computer usable program code takes a non-transitory form.

Computer program code for carrying out operations of the present disclosure may be written in any combination of one or more programming languages, including an object-oriented programming language such as Python, Java, JavaScript, TypeScript, C, C#, C++, SQL, or the like and conventional procedural programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a cell network, a local area network (LAN) or a wide area network (WAN), or the connection may be made to an external computer (for example, through the Internet using an Internet Service Provider).

In certain embodiments, the insertion of inspection elements 128 into respective cooling holes 134 can be manually performed by a human. In this case, each of one or more inspection elements 128 can be arranged to be manually positioned in a respective cooling hole 134 of perhaps plurality of cooling holes 120. Some form of trigger (not shown) can be provided that causes controller 150 to direct 3FT transducer 140 to measure at least three-axes forces and three-axes torques, i.e., force Fx, force Fy, force Fz, torque Mx, torque My and/or torque Mz. However, in other embodiments, as noted, inspection system 126 may further include an at least semi-automated positioning system 178 (hereafter "positioning system 178") configured to insert each probe element 132 into the respective cooling hole 134, e.g., simultaneously or sequentially. Controller 150 may be operatively coupled to positioning system 178 to control, at least some, operations of positioning system 178 via positioning system controller 188 thereof. Alternatively, positioning system 178 may be used separately from controller 150 to at least semi-automatically position each of one or more inspection elements 128 in a respective cooling hole 134 of perhaps plurality of cooling holes 120. In certain embodiments, positioning system 178 may include any now known or later developed form of fully automated robot that does not require human interaction. Alternatively, positioning system 178 may include any now known or later developed semi-automated collaborative robot that requires some human interaction. A semi-automated collaborative robot may assist otherwise human activity, for example, with lifting and/or positioning numerous inspection elements 128. In any event, as shown in FIG. 3, positioning system 178 is configured to insert (and retract) probe element(s) 132 of inspection element(s) 128 within (from) respective cooling hole(s) 134. More particularly, positioning system 178 is configured to position inspection elements 128 (perhaps under control of controller 150) within respective cooling holes 134 such that 3FT transducer 140 can measure at least three-axes forces Fx, Fy, Fz and three-axes torques Mx, My, Mz, i.e., over time. As the different types of positioning systems 140 are well known in the art, no further details are necessary for understanding by those with skill in the art.

Regardless of whether inspection system 126 is fully-automated, semi-automated or manually operated, controller 150 can measure at least three-axes forces Fx, Fy, Fz and three-axes torques Mx, My, Mz using 3FT transducer 140. Controller 150 can also determine whether respective cooling hole 134 is at least partially blocked based on at least one of three-axes forces Fx, Fy, Fz and three-axes torques Mx, My, Mz measured by 3FT transducer 140 of inspection element 128 inserted into the respective cooling hole 134. Where positioning system 178 is used, controller 150 may also control parameters of the positioning of injector elements 128, e.g., initial force used, speed and/or path.

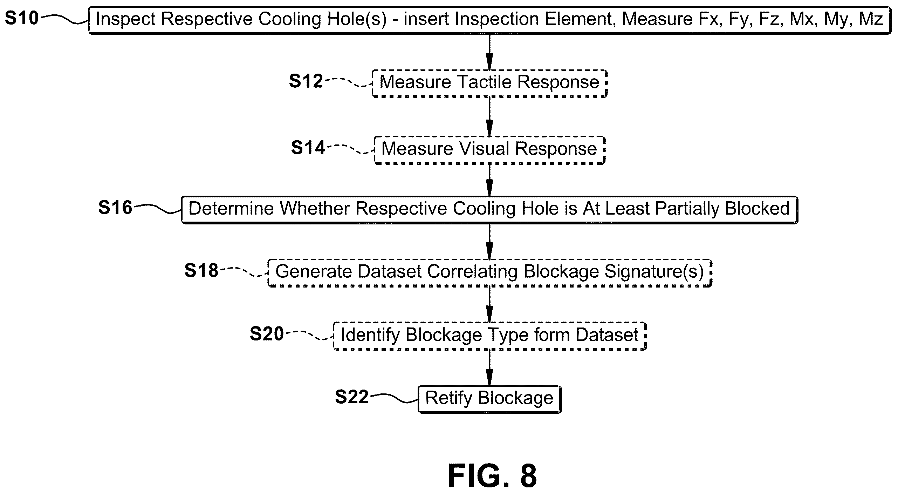

With reference to FIGS. 3, 4, 6-8, a computer-implemented method of inspecting cooling holes for blockage will now be described. FIG. 8 shows a flow diagram for describing the computer-implemented method of inspecting plurality of cooling holes 120 (FIGS. 1-3) in component 90. More particularly, the flow diagram describes the method of determining whether respective cooling hole 134 is at least partially blocked based on at least one of the three-axes forces Fx, Fy, Fz (FIGS. 4, 6 and 7) and three-axes torques Mx, My, Mz (FIGS. 4, 6, 7) measured by 3FT transducer 140 of inspection element 128 inserted into the respective cooling hole 134.

In step S10, as shown in FIG. 4, for each respective cooling hole 134 of plurality of cooling holes 120 for which inspection is desired, the method may include inspecting each, or at least some, of respective cooling hole(s) 134 using a respective inspection element 128. More particularly, the inspecting includes inserting probe element 132 of an inspection element(s) 128 into a respective cooling hole(s) 134. As described herein, each inspection element 128 includes probe element 132 configured to be inserted into respective cooling hole 134 of plurality of cooling holes 120, and 3FT transducer 140 operatively coupled to probe element 132. Further, 3FT transducer 140 is configured to measure three-axes forces Fx, Fy, Fz applied to probe element 132 and three-axes torques Mx, My, Mz applied to probe element 132. More particularly, during insertion into respective cooling hole 134, 3FT transducer 140 measures at least three-axes forces Fx, Fy, Fz and three-axes torques Mx, My, Mz, i.e., it starts and continues to measure three-axes forces Fx, Fy, Fz and three-axes torques Mz, My, Mz as probe element 132 is inserted over time. In the FIG. 6 embodiment, tactile transducer 142 may also measure tactile response TR. In the FIG. 7 embodiment, tactile-visual transducer 144, including imaging device 146, may also measure visual response VR, e.g., an image of an at least partial blockage. As noted, some form of trigger may be used to indicate when to start measuring, or measurement can start automatically, e.g., from an 'always on' arrangement, based on some change in measurement of three-axes forces Fx, Fy, Fz or three-axes torques Mx, My, Mz from a non-inserted position of probe element(s) 132.

As noted, the insertion of probe element(s) 132 may be performed manually. Alternatively, positioning system 178 may be used to at least semi-automatically position each of one or more inspection elements 128 in a respective cooling hole 134 of perhaps plurality of cooling holes 120. As noted, positioning system 178 may include any now known or later developed form of fully-automated robot that does not require human interaction. In this case, positioning system 178 may be controlled by inspection system controller 156 via positioning system controller 188, or by positioning system controller 188 alone, to position probe element(s) 132 into respective cooling hole(s) 134. Alternatively, positioning system 178 may include any now known or later developed semi-automated collaborative robot that requires some human interaction. In any event, as shown in FIGS. 3 and 4, positioning system 178 may optionally be used to position probe element(s) 132 of inspection element(s) 128 within respective cooling hole(s) 134.

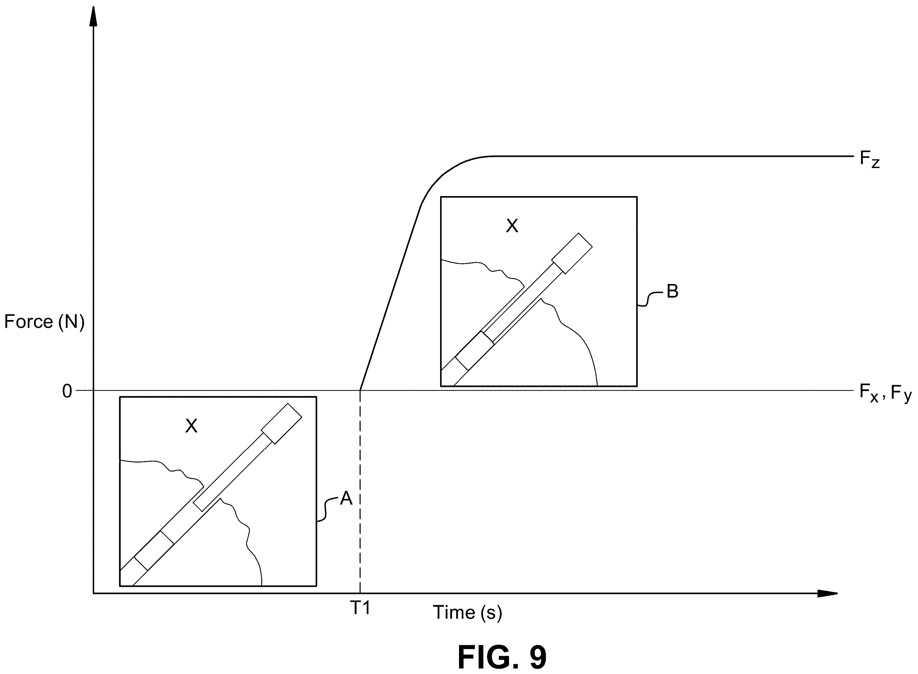

FIG. 9 shows a graph illustrating three-axes forces Fx, Fy, Fz measurements versus time during inspection of a blocked cooling hole 120 in FIG. 4, according to embodiments of the disclosure. As shown in FIG. 4, respective cooling hole 134 has some sort of blocking material 190 (FIG. 4), e.g., drill bit, masking material, etc., therein at least partially blocking respective cooling hole 134. In the FIG. 4 cross-section, blocking material 190 blocks a majority of respective cooling hole 134 so it at least appears completely blocked. That stated, it will be understood that some part of cooling hole into or out of the page may be open, so cooling hole 134 is only partially blocked. Blocking material 190 is also shown with a planar surface 192 perpendicular to an axis of probe element 132 - see dashed line. As shown in FIG. 9, as probe element 132 is inserted (see inset image A), three-axes forces Fx, Fy, Fz remain constant at zero. When probe element 132 engages blocking material 190 at time T1 (see inset image B), three-axes force Fz, which as shown by the legend in FIG. 4 is an axial force along probe element 132, rapidly increases in value as probe element 132 is pushed against blocking material 190. Here, blocking material 190 has sufficient volume and/or extends across respective cooling hole 134 sufficiently to not rotate or turn probe element 132 that would create a change in three-axes torques Mx, My or Mz. Rather, blocking material 190 only creates an increased value of axial force Fz. That is, in the FIGS. 4 and 9 example, no change in three-axes torques Mx, My, Mz values are measured since probe element 132 enters respective cooling hole 134 without being turned by any obstruction. The measurement shown in FIG. 9 is typical of a complete blockage where blocking material 190 presents planar surface 192 generally perpendicular to the Z axis of probe element 132 and 3FT transducer 140 (see dashed line in FIG. 4). Force Fz increases to a certain maximum level (i.e., the force used to insert probe element 132) after which no additional insertion of probe element 132 occurs.

Continuing with FIG. 8, during insertion, as shown as optional step S12 by dashed line box, controller 150 could also direct tactile transducer 142 (FIG. 6), where provided, to measure tactile response TR (FIG. 6), e.g., with each tactile element measuring an image pixel providing both the location and numerical values of force and/or torque. This tactile data may also include information on a spiking frequency and can be used to correlate with and identify the type and severity of blockages. Spiking frequency refers to the rate at which a tactile element within a tactile transducer 142 registers a force or torque event. Furthermore, it can also denote the frequency at which the force or torque sensed by tactile transducer 142 surpasses a specified threshold. During insertion, as shown as optional step S14 by dashed line box, controller 150 could also direct tactile-visual transducer 144 via imaging device 146 (FIG. 7), where provided, to measure visual response VR (FIG. 7).

Steps S10, and optional steps S12 and S14, can be performed for each respective cooling hole 134 having an inspection element 128 inserted therein by inspection system 126 so measurements can be determined for any number of plurality of cooling holes 120. This process may occur simultaneously or sequentially.

In step S16, determinator 180 determines whether respective cooling hole 134 into which a respective inspection element 128 is inserted is at least partially blocked based on at least one of the three axes forces, i.e., Fx, Fy and/or Fz, and three axes torques, i.e., Mx, My and/or Mz, measured by 3FT transducer 140 of the respective inspection element 128. That is, determinator 180 (FIG. 3) of inspection system controller 156 (FIG. 3) of controller 150 (FIG. 3) determines whether the respective cooling hole 134 into which a respective inspection element 128 is inserted is at least partially blocked based on force Fx, force Fy, force Fz, torque Mx, torque My and/or torque Mz measured by 3FT transducer 140 of the respective inspection element 128. This step can be carried out for each inspection element 128 used by inspection system 126 so a blockage can be determined for any number of plurality of cooling holes 120 simultaneously. As shown in one illustrative measurement in FIG. 9, for a complete blockage where blocking material 190 (FIG. 4) extends across an entirety of the cross-section of respective cooling hole 134, determinator 180 can determine a blockage based on force Fz changing beyond a predefined amount, which can be user-specified. As noted, the illustrative measurement by 3FT transducer 140 (FIGS. 3 and 4) in the graph of FIG. 9 is indicative of a complete blockage.

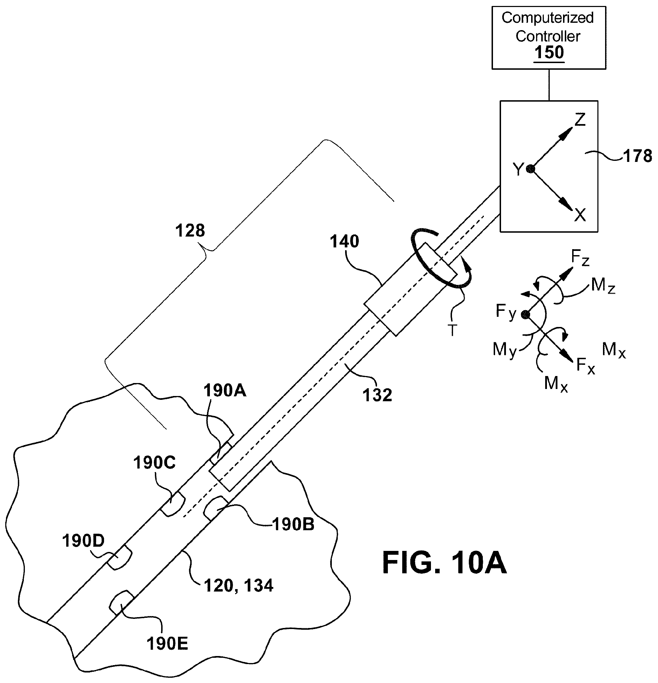

Application of inspection system 126 is not limited to use of a single axial force Fz measurement. As described herein, 3FT transducer 140 measures force Fx, force Fy, force Fz, torque Mx, torque My and/or torque Mz. Also, tactile transducer 142 optionally measures tactile response TR (FIG. 6) and tactile-visual transducer 144, via imaging device 146, optionally measures visual response VR (FIG. 7). In accordance with embodiments of the disclosure, the various measured parameters can be used to make much more precise and detailed determinations relative to the at least partial blockage of cooling holes 120. To illustrate, FIGS. 10A-B show partially cross-sectional side views of inspection element 128 of inspection system 126 (FIG. 3) being inserted in an at least partially blocked cooling hole 134 according to other embodiments of the disclosure. As shown in FIGS. 10A-B, respective cooling hole 134 has blocking materials 190A-E (FIG. 4), e.g., masking material residue, drill bit parts, etc., therein that at least partially block respective cooling hole 134 at different axial locations along the hole. For purposes of description, it is assumed that each blocking material 190A-E blocks: a) only a part of a cross-sectional dimension of respective cooling hole 134 so probe element 132 may engage each blocking material 190A-E in sequence, b) only a small axial length of respective cooling hole 134; and c) perhaps only a portion of a circumferential extent of respective cooling hole 134. Henc, FIGS. 10A-B show step S10 according to other embodiments of the disclosure in which a partial blockage is present in respective cooling hole 134.

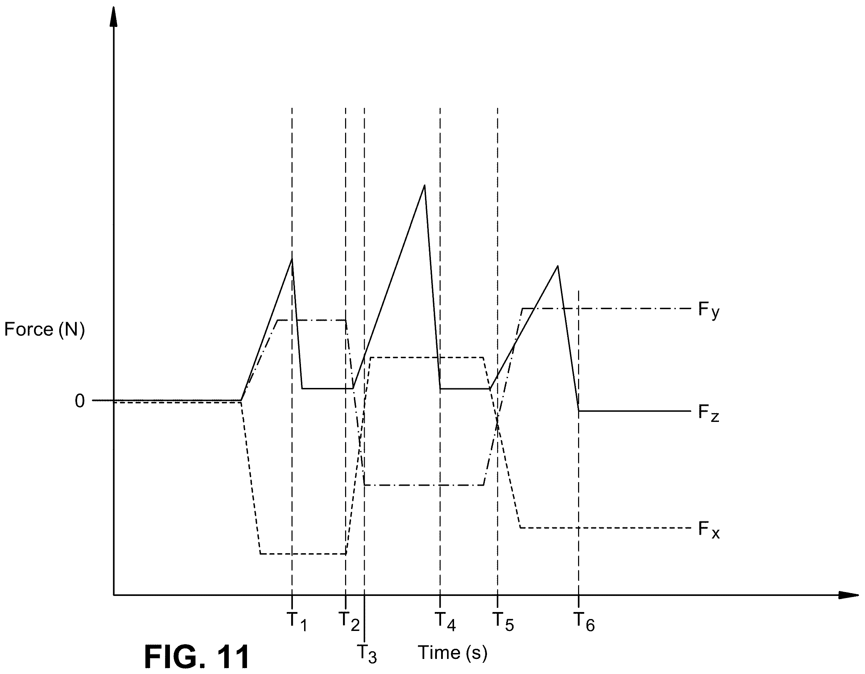

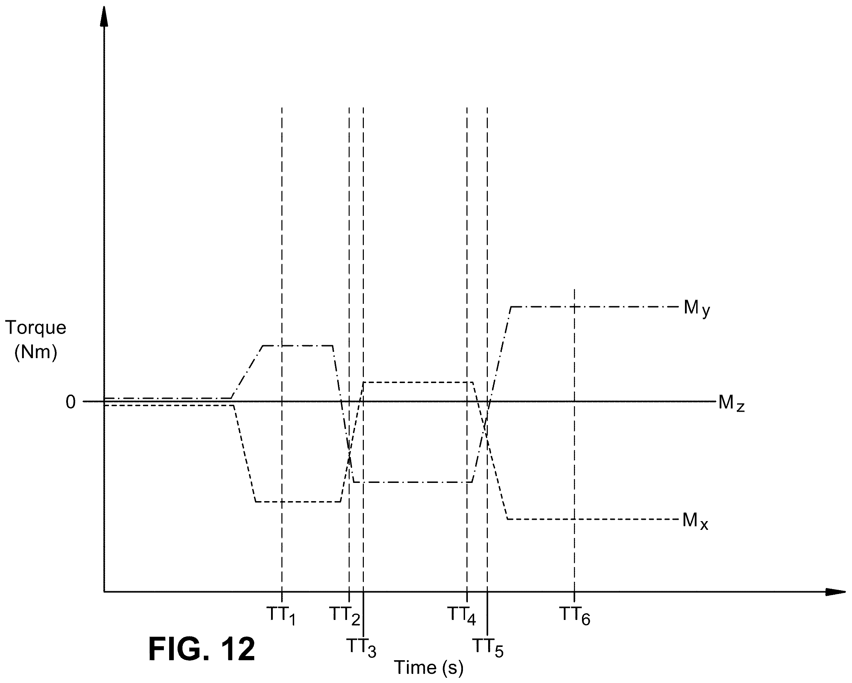

FIG. 11 shows a graph illustrating three-axes forces Fx, Fy, Fz measurements versus time during inspection of partially blocked cooling hole 134 in FIGS. 10A-B, and FIG. 12 shows a graph illustrating three-axes torques Mx, My, Mz measurements versus time during inspection of a partially blocked cooling hole 134 in FIGS. 10A-B. As noted, for each respective cooling hole 134 of plurality of cooling holes 120, the method may include inspecting each, or at least some, of respective cooling hole(s) 134 using inspection element 128. More particularly, the inspecting includes inserting probe element 132 of an inspection element(s) 128 into a respective cooling hole(s) 134, as shown in FIG. 10A. As shown in FIG. 11, as probe element 132 is inserted, three-axes forces Fx, Fy, Fz remain constant at zero as probe element 132 is inserted. As also shown in FIG. 11, when probe element 132, engages an outermost blocking material 190A at time T1, three-axes forces Fx, Fy and Fz all change value. For example, forces Fy and Fz may be positive forces (e.g., push) above zero, and force Fx may be a negative force (e.g., pull) below zero. Similarly, as shown in FIG. 12, when probe element 132 engages blocking material 190A at time TT1, torques Mx, My change value from zero. For example, torque My may be a positive torque (e.g., clockwise rotational force) above zero and torque Mx may be a negative torque (e.g., counterclockwise rotational force) below zero. In the example, torque Mz remains at zero. In summary, blocking material 190A has sufficient volume and/or extends across respective cooling hole 134 in a manner to rotationally force probe element 132 around two axes (X and Y) and create forces (other than zero) along three axes (X, Y and Z) as probe element 132 engages blocking material 190A.

As an aside, 3FT transducer 140 and probe element 132 may be configured such that prior to insertion into respective cooling hole 134, 3FT transducer 140 measurements are zeroed and probe element 132 is in a predefined orientation from which forced (rotational or linear) movement by engagement with blocking material 190A-E in the respective cooling hole 134 in a given direction results in known positive and negative measured values for the three-axes forces (e.g., push in positive direction, pull in negative direction) and three-axes torques (e.g., clockwise positive, counterclockwise negative).

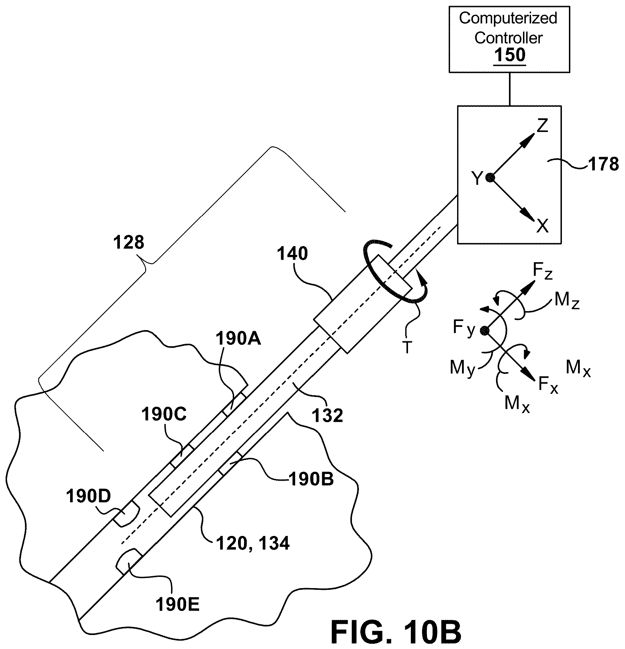

Continuing with FIG. 10B, as probe element 132 continues to be inserted into respective cooling hole 134, as shown in FIGS. 11 and 12, it engages the different blocking materials 190B, 190C, 190D, 190E at different times T1, T2, T3, T4, T5 (FIG. 11) and TT1, TT2, TT3, TT4, TT5 (FIG. 12) in different ways. (Note, FIG. 10B shows end of probe element 132 having passed blocking material 190C, but it is understood, probe element 132 passes each blocking material 190A-E sequentially). As this occurs, three-axes forces Fx, Fy and Fz change value and three-axes torques Mx, My and Mz change value depending on how each blocking material 190B-E causes probe element 132 to react, as measured by 3FT transducer 140. For example, as shown in FIG. 11, at time T2, at least one of three-axes forces changes from the value at time T1. For example, force Fx increases to a positive value, force Fy decreases to a negative value, and force Fz decreases to near zero. Similarly, as shown in FIG. 12, when probe element 132 engages blocking material 190B at a time TT2, torques Mx, My change value. For example, torque My decreases to a negative torque (e.g., counterclockwise rotational force) below zero and torque Mx increases to a positive torque (e.g., clockwise rotational force) above zero. In the example, torque Mz remains at zero. Here, material 190B has sufficient volume and/or extends across respective cooling hole 134 in a manner to rotationally force (other than zero) probe element 132 around two axes (X and Y) and create forces (other than zero) along three axes (X, Y and Z), but in a different way than was measured for material 190A. In this manner, each at least partial blockage created by blocking material 190A-E has a different "blockage signature" including, for example, a particular value(s) or pattern(s) of force(s) Fx, Fy, Fz and/or torque(s) Mx, My and/or Mx that can be used to identify the type of blockage, e.g., in other cooling holes 120.

Note, the blockage signature for each blocking material 190A-E is generally shown at the time at which probe element 132 engages it. It is emphasized that the numbered times on the graphs of FIGS. 11 and 12, e.g., T1-T6 in FIGS. 11 and TT1-TT6 in FIG. 12, may not chronologically match based on their numerical assignments. More particularly, for any of the illustrative blocking materials 190A-E, 3FT transducer 140 may measure force(s) and torque(s) at different times as probe element 132 engages and/or moves through the given blocking material 190A-E. For example, as probe element 132 initially engages blocking material 190C, 3FT transducer 140 may measure changes in one force or another at time A, but not measure changes in one torque or another until after time A. That is, forces can change at different times and torques can change at different times. Note also, time T6 in FIG. 11 and time TT6 in FIG. 12 indicate time(s) after which probe element 132 has passed the last blocking material 190E and the forces and torques may remain constant since no additional blocking material other than blocking materials 190A-E are engaging probe element 132.

With further regard to FIGS. 11 and 12, in the manner described, each blocking material 190A-E has its own specific blockage signature for the respective cooling hole 134 based on its three-axes forces and three-axes torques measured by 3FT transducer 140. More particularly, the result of the previously described process is that each blocking material 190A-E has a distinctive blockage signature for a given type, e.g., size, shape, etc., of respective cooling hole 134 that can be correlated in terms of a wide variety of blockage types. The number and variety of blockage types identified can be as numerous as a user may wish based on the available data. The blockage types may be categorized, for example, as complete blockages (e.g., where maximum force Fz increases to and remains constant as in FIG. 9); partial blockages (e.g., where force(s) Fx, Fy, Fz and torque(s) Mx, My, Mz change over time); or multiple blockages that form into a complete blockage (e.g., where forces Fx, Fy and/or Fz and/or torque Mx, My and/or Mz approach constant over time). Blockage types may also be categorized, for example, as extending completely around an interior circumference of respective cooling hole 134 (determined by, e.g., a temporarily increased force Fz as probe element 132 engages and passes through it), or partially circumferentially extending (determined by, e.g., probe element 132 being turned in one or more directions creating various torques My, Mx). Blockage types may also be categorized, for example, based on the curvature of a surface of the blocking material 190A-E: planar (determined by, e.g., no torques) or angle or curved in a certain direction (determined by e.g., certain torques perhaps in combination with certain forces). Blockage types can be categorized based on the material of the blockage, such as but not limited to: foreign contaminants from a service of the device (e.g., rust, debris); residual metallic coating; residual masking material; and/or other foreign material from manufacturing processes: machining chips, swarf, ash, weld/braze overflow, grit blast media, etc.

Where tactile transducer 142 (FIGS. 6 and 7) is used, the tactile response TR may be used to further categorize the type of blockage. For example, different types of tactile response TR can be included in the blockage signatures correlated to determine the material of different blocking materials 190A-E, different shapes, sizes, axial depths of different blocking materials 190A-E (see list above). An axial depth of a blockage is dependent on the source of the blockage, but in one non-limiting example, axial depth could be as larger than a diameter of the hole, such as 2-3 times the diameter of the hole. Where imaging device 146 (FIG. 7) is used, the visual response VR can be used to confirm any of the characteristics of blocking materials 190A-E described herein. Tactile response TR and/or visual response VR can also be included as part of blockage signatures.

It is emphasized that the blockage types described herein are not a comprehensive list, and that any blockage type that can be identified based on the data collected by the various devices described herein may be used within the scope of the disclosure.

Returning to FIG. 8, in optional step S18, signature generator 182 of inspection system controller 156 of controller 150 may generate a dataset correlating a plurality of blockage signatures with a plurality of blockage types for at least one type of cooling hole 120, which dataset may be stored in database 174 (FIG. 3). Each blockage signature is based on at least one of three-axes forces Fx, Fy, Fz and three-axes torques Mx, My, Mz measured by 3FT transducer 140 for the at least partial blockage of a respective cooling hole 134 of the same type as the at least one type of cooling hole 120. As noted, signature generator 182 may store the dataset including the blockage signatures in database 174 with data regarding any desired particulars about the type of the respective cooling hole 134, e.g., inner dimension(s) ID (FIGS. 4 and 10) or D1 and D2 (FIG. 5), length, angle at exterior surface 118 (FIGS. 4, 5, 10) of component 90 (FIGS. 4, 5, 10), etc. In this manner, the different blockage signatures can be correlated to the various blockage types for particular cooling holes and stored for later use.

The different blockage signatures can be correlated to the various blockage types in any now known or later developed manner. In certain embodiments, a user may interact with signature generator 182 to correlate a particular blockage signature with a blockage type and type of cooling hole. In other embodiments, signature generator 182 may automatically store a particular blockage signature with a blockage type and type of cooling hole, e.g., building the dataset based on previous information in the dataset. In other embodiments, controller 150, e.g., inspection system controller 156, may also include at least one of a machine learning algorithm (ML Alg.) and an advanced statistical analysis (ASA) engine 186 configured to analyze the dataset. The analysis by MLA/ASA engine 186 may correlate measured data with various blockage signatures, thereby enhancing detection accuracy and predicting potential blockage issues before they become critical. For example, MLA/ASA engine 186 can effectively identify and classify the type and severity of blockages. This predictive capability not only increases operational efficiency but also aids in maintenance planning and risk management for systems dependent on, for example, effective cooling mechanisms. Additionally, MLA/ASA engine 186 may assist in identifying blockage types and recommending suitable rectification procedures.

In optional step S20, blockage type identifier 184 of controller 150 may identify a blockage type of an at least partial blockage in another respective cooling hole 134 by comparing the blockage signature of the at least partial blockage to the plurality of blockage signatures in the dataset. The dataset can include but is not limited to time series data of numerical values representing a magnitude and direction of the measured force(s) and/or rotational torque(s); relative changes in the measured force(s) and torque(s) over time; and/or tactile and/or visual responses, where each tactile element is analogous to an image pixel, providing both the location and numerical values of the measured force and/or torque. In this manner, prior knowledge of blockage signatures can be used to identify a blockage type for a particular type of cooling hole 120.

In step S22, in response to respective cooling hole 134 being at least partially blocked, some form of action can be performed to rectify the at least partial blockage. The action can include any now known or later developed work to remedy the at least partial blockage. In certain embodiments, the action may be based on the blockage type identified in step S20. Some examples of the action may include but are not limited to: removing the at least partial blockage using any appropriate technique for the blockage type (e.g., where the blockage type allows), repairing respective cooling hole 134 to avoid the at least partial blockage, and/or closing respective cooling hole 134, e.g., by filling it in at exterior surface 118 of component 90, for example, where the blockage type cannot be rectified in an efficient manner. Removing a blockage may include, for example, manual methods such as inserting a pin gauge or piano wire; mechanical methods such as diamond reaming/honing using a diamond reamer to precisely ream/hone the cooling hole and/or drilling using drill bits to open the blocked cooling hole; and/or electrical methods such as electrical discharge machining (EDM) using an EDM machine to open the blocked cooling hole.

Embodiments of the disclosure provide various technical and commercial advantages, examples of which are discussed herein. The inspection system enables non-destructive inspection of cooling holes with increased accuracy and efficiency. The inspection system and method do not require flowing a fluid through the component or direct line-of-sight to the cooling holes and do not rely on human sensory feedback.

The present disclosure is described herein with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

As discussed herein, various systems and components may be described as "obtaining" data. It is understood that the corresponding data can be obtained using any solution. For example, the corresponding system/component can generate and/or be used to generate the data, retrieve the data from one or more data stores (e.g., a database), receive the data from another system/component, and/or the like. When the data is not generated by the particular system/component, it is understood that another system/component can be implemented apart from the system/component shown, which generates the data and provides it to the system/component and/or stores the data for access by the system/component.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise. "Approximately" or "about," as applied to a particular value of a range, applies to both end values and, unless otherwise dependent on the precision of the instrument measuring the value, may indicate +/- 10% of the stated value(s).

The foregoing drawings show some of the processing associated according to several embodiments of this disclosure. In this regard, each drawing or block within a flow diagram of the drawings represents a process associated with embodiments of the method described. It should also be noted that in some alternative implementations, the acts noted in the drawings or blocks may occur out of the order noted in the figure or, for example, may in fact be executed substantially concurrently or in the reverse order, depending upon the act involved. Also, one of ordinary skill in the art will recognize that additional blocks that describe the processing may be added.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to explicitly shown embodiments herein disclosed. Many modifications and variations will be apparent to those of ordinary skill in the art without departing from the scope of the appended. The embodiment was chosen and described in order to best explain the principles of the disclosure and the practical application and to enable others of ordinary skill in the art to understand the disclosure for various embodiments with various modifications as are suited to the particular use contemplated.

## Claims

1. A method for inspecting a plurality of cooling holes (120) in a component (90), the method comprising:
inspecting (S10) each respective cooling hole of the plurality of cooling holes using an inspection element (128) including at least one probe element (132), at least a forward section of the at least one probe element configured to be inserted into a respective cooling hole of the plurality of cooling holes, and a three-axes force/torque transducer (140) operatively coupled to the probe element, the three-axes force/torque transducer configured to measure forces exerted on the probe element along three force measurement axis and torques exerted on the probe element around three torque measurement axis,
wherein the inspecting includes inserting at least the forward section of a respective one of the at least one probe element (132) into the respective cooling hole (120),
measuring, via the three-axes force/torque transducer (140), forces exerted on the respective one of the at least one probe element along each of the three force measurement axis and torques exerted on the respective one of the at least one probe element around each of the three torque measurement axis.

2. The method of the preceding claim, further comprising determining (S16) whether the respective cooling hole (120) is at least partially blocked based on at least one of the three-axes forces and the three-axes torques measured by the three-axes force/torque transducer of the inspection element inserted into the respective cooling hole.

3. The method of the preceding claim, comprising, in response to the respective cooling hole (120) being at least partially blocked, performing (S22) an action to rectify the at least partial blockage.

4. The method of any preceding claim, further comprising generating (S18) a dataset correlating a plurality of blockage signatures with a plurality of blockage types for at least one type of cooling hole, wherein each blockage signature is based on at least one of the three-axes forces and the three-axes torques measured by the three-axes force/torque transducer for the at least partial blockage of a respective cooling hole of the same type as the at least one type of cooling hole.

5. The method of the preceding claim, further comprising identifying (S20) a blockage type of an at least partial blockage in another respective cooling hole by comparing the blockage signature of the at least partial blockage to the plurality of blockage signatures in the dataset.

6. The method of any of claims 4 or 5, further comprising using at least one of a machine learning algorithm and an advanced statistical analysis engine to analyze the dataset.

7. The method of any preceding claim, wherein the inspection element (128) further includes a tactile transducer (142), the method further comprising using the tactile transducer to measure (S12) a tactile response of the at least partial blockage in the respective cooling hole in response to a predefined frequency applied thereto.

8. The method of any preceding claim, wherein the inspection element further includes a tactile-visual transducer (144), the method further comprising using the tactile-visual transducer to measure a tactile response (S12) and a visual response (S14) of the respective cooling hole in response to a predefined frequency applied thereto.

9. The method of any of the two preceding claims, further comprising determining whether the respective cooling hole (120) is at least partially blocked based on at least one of the tactile response measured by the tactile transducer (142) and a combination of the tactile response and the visual response measured by the tactile/visual transducer (144) in addition to the at least one of the three-axes forces and the three-axes torques measured by the three-axes force/torque transducer of the inspection element inserted into the respective cooling hole.

10. The method of the preceding claim including the features of claim 4, wherein each blockage signature is further based on at least one of the tactile response measured by the tactile transducer (142) and a combination of the tactile response and the visual response measured by the tactile/visual transducer (144) for the at least partial blockage of the respective cooling hole of the same type as the at least one type of cooling hole.

11. An inspection system (126) for inspecting a plurality of cooling holes (120) in a component (90), the inspection system comprising:
at least one inspection element (128), each inspection element including:
at least one probe element (132), wherein at least a forward section of the at least one probe element is configured to be inserted into a respective cooling hole of the plurality of cooling holes; and
a three-axes force/torque transducer (140) operatively coupled to each probe element, the three-axes force/torque transducer configured to measure forces excerted on the probe element along three force measurement axis and torques exerted on the probe element around three torque measurement axis, and
a controller (150) operatively coupled to each inspection element and configured to determine whether the respective cooling hole (120) into which a respective inspection element is at least partially inserted is at least partially blocked based on at least one of the three-axes forces and the three-axes torques measured by the three-axes force/torque transducer (140) of the respective inspection element.

12. The inspection system of the preceding claim, wherein the controller (150) is further configured to generate a dataset correlating a plurality of blockage signatures with a plurality of blockage types for at least one type of cooling hole, wherein each blockage signature is based on at least one of the three-axes forces and the three-axes torques measured by the three-axes force/torque transducer for the at least partial blockage of a respective cooling hole of the same type as the at least one type of cooling hole.

13. The inspection system of any of claims 11 or 12, wherein the at least one inspection element (128) further includes a tactile transducer (142) configured to measure a tactile response of the respective cooling hole (120) in response to a predefined frequency applied thereto, wherein the controller (150) is further configured to determine whether the respective cooling hole is at least partially blocked based on the tactile response in addition to the at least one of the three-axes forces and the three-axes torques measured by the three-axes force/torque transducer of the inspection element inserted into the respective cooling hole.

14. The inspection system of any of claims 11 through 13, wherein the at least one inspection element further includes a tactile-visual transducer (144) configured to measure a tactile response and a visual response of the respective cooling hole in response to a predefined frequency applied thereto, and wherein the controller (150) is further configured to determine whether the respective cooling hole (120) is at least partially blocked based on the tactile response and the visual response in addition to the at least one of the three-axes forces and the three-axes torques measured by the three-axes force/torque transducer of the inspection element inserted into the respective cooling hole.

15. The inspection system of any of claims claim 11 through 14, further comprising an at least semi-automated positioning system (178) configured to insert at least the forwards section of each of the at least one probe element (132) into the respective cooling hole (120).
